# EUROPÄISCHE PATENTSCHRIFT

(11) **EP 4 273 648 B1**
(45) Veröffentlichungstag und Bekanntmachung des Hinweises auf die Patenterteilung: **12.11.2025**
(21) Anmeldenummer: 23198244.8
(22) Anmeldetag: 25.01.2017
(51) Int. Cl.: G05B 19/042, G05B 19/418

(54) **MODUL FÜR EINE TECHNISCHE ANLAGE UND VERFAHREN ZUR STEUERUNG EINER TECHNISCHEN ANLAGE**
MODULE FOR A TECHNICAL INSTALLATION AND METHOD FOR CONTROLLING A TECHNICAL INSTALLATION
MODULE POUR UNE INSTALLATION TECHNIQUE ET PROCÉDÉ DE COMMANDE D'UNE INSTALLATION TECHNIQUE

(30) Priorität: 26.01.2016 DE 102016201077
(43) Veröffentlichungstag der Anmeldung: 08.11.2023
(62) Teilanmeldung aus: 17703671.2
(73) Patentinhaber: Wago Verwaltungsgesellschaft mbH, 32423 Minden (DE)
(72) Erfinder: ALBERS, Thomas, 32427 Minden (DE); HOLM, Thomas, 31655 Stadthagen (DE)
(74) Vertreter: Bardehle Pagenberg Partnerschaft mbB Patentanwälte Rechtsanwälte

(56) Entgegenhaltungen:
- WAGO: "DIMA - Dezentrale Intelligenz f�r modulare Anlagen", 14 December 2015 (2015-12-14), pages 1 - 8, XP055355896, Retrieved from the Internet <URL:http://www.dima-process.com/wp-content/uploads/2015/12/WHITEPAPER_Technische_Loesung_fuer_die_Automatisierung_modularer_Anlagen.pdf> [retrieved on 20170317]
- WAGO: "DIMA", 20 March 2017 (2017-03-20), pages 1 - 1, XP055356602, Retrieved from the Internet <URL:http://www.dima-process.com/> [retrieved on 20170320]

## Beschreibung

### 1. Gebiet der Erfindung

Die vorliegende Erfindung betrifft technische Anlagen und deren Steuerung. Insbesondere betrifft die vorliegende Erfindung modular aufbaubare prozess- und produktionstechnische Anlagen.

### 2. Stand der Technik

In der Prozessindustrie, insbesondere in der Chemie, Pharmazie und Nahrungsmittelherstellung, sind die nachgefragten Produktmengen zunehmend schwerer prognostizierbar und schwanken regional abhängig in kurzfristigen Zeitabständen. Zudem werden die Produktlebenszyklen durch die globale Verfügbarkeit von Alternativen insgesamt immer kürzer.

Herkömmliche Produktionsanlagen sind jedoch oft auf diese schwankenden Produktmengen nicht ausgelegt. Kontinuierlich betriebenen Anlagen sind meist auf eine bestimmte Produktmenge pro Zeiteinheit hin optimiert und können auch nur effektiv mit dieser Produktionsrate betrieben werden. Gewöhnliche Anlagen für einen Batchbetrieb sind weniger effizient und erfordern viele unproduktive Zeiten, zum Beispiel Reinigungszeiten oder Umrüstzeiten.

Bei einer Ergänzung oder Umrüstung der Anlage ist es in der Regel notwendig auch die entsprechende Anlagensteuerung umzukonfigurieren oder umzuprogrammieren. Dies ist ein aufwendiger Prozess, der zeitlich oft vergleichbar ist mit der hardwaremäßigen Umrüstung. Erschwert wird dies durch eine möglichweise unzureichende Dokumentation der bestehenden Steuerungssoftware oder veraltete Steuerungshardware, die die für die neue Hardware benötigten Funktionen möglicherweise nicht ausreichend bereitstellt.

Neuere Entwicklungen in der Prozessindustrie beschäftigen sich mit modularen Anlagenkonzepten, bei denen die Anlage aus einzelnen vorgefertigten Modulen aufgebaut ist. Derartige Konzepte und ihre Herausforderungen werden in einer Umfrage *"*Modulare Anlagenkonzeption und Automatisierung mithilfe des F3-Projektes" von Dipl.-Ing. Sabine Mühlenkamp / Wolfgang Ernhofer, 10.05.2012, in "Process*"* beschrieben. Auch hierin wird die steuerungstechnische Integration der Module als noch offene Frage angesehen.

Entsprechende modulare Konzepte sind auch auf andere Produktionsprozesse, z.B. für die Produktion von Konsumgütern, industriellen Produkten, etc. übertragbar.

Bei solchen modularen Konzepten stellt jedes Anlagenmodul seine verfahrenstechnische oder produktionstechnische Funktion als Dienst einer übergeordneten Prozessführungsebene (PFE) zur Verfügung. Es nimmt damit die Position eines Dienstanbieters ein. Die vom Anlagenmodul angebotene Dienstleistung kann von der Prozessführungsebene abgerufen werden, die damit ein Dienstnutzer ist. Die Integration mehrerer Anlagenmodule und deren Dienste zu einer Gesamtanlage wird als PFE-Engineering bezeichnet.

Das Dokument "DIMA - Dezentrale Intelligenz für modulare Anlagen" der WAGO Kontakttechnik GmbH & Co. KG beschreibt eine modulare und dezentrale Automatisierung einer verfahrenstechnischen Produktionsanlage mit Modulen gemäß dem Oberbegriff des Anspruchs 1.

Es stellt sich daher die Aufgabe der vorliegenden Erfindung Module einer technischen Anlage hinsichtlich ihrer steuerungstechnischen Integration zu verbessern und damit insgesamt das PFE-Engineering zu erleichtern.

### 3. Zusammenfassung der Erfindung

Gelöst wird die obige Aufgabe durch ein Modul für eine technische Anlage nach Anspruch 1, einer technischen Anlage nach Anspruch 14 sowie durch ein Verfahren zur Steuerung einer technischen Anlage nach Anspruch 15.

Insbesondere wird die obige Aufgabe gelöst durch ein Modul für eine technische Anlage aufweisend eine technische Hardware zur Durchführung eines technischen Teilprozesses, eine Steuerung zur lokalen Steuerung der technischen Hardware, wobei die Steuerung eingerichtet ist, die technische Hardware autark zu steuern, und das Modul eine Außenschnittstelle der Steuerung aufweist, wobei die Außenschnittstelle eingerichtet ist, Befehle zu empfangen, die definierten Zuständen des Moduls entsprechen, und wobei die Außenschnittstelle der Steuerung einen Server umfasst, und der Server eine fest vorgegebene Informationsstruktur mit statischen Informationen und dynamischen Informationen aufweist, wobei die statischen Informationen die technische Hardware und die Steuerung beschreiben und die Steuerung die dynamischen Informationen als Echtzeit-Werte der technischen Hardware in die Informationsstruktur schreibt, wobei die Steuerung eingerichtet ist, die technische Hardware basierend auf den definierten Zuständen autark in einen Zustand aus einer Anzahl von definierten technischen Zuständen zu bringen und autark zwischen den Zuständen zu wechseln.

Eine technische Anlage kann aus mehreren dieser Module aufgebaut sein. Wird mehr Produktionskapazität gewünscht, können Module auf eine einfache Art und Weise zur Anlage hinzugeschaltet werden und dann bestimmte Teilprozesse durchführen. Da die Steuerung des jeweiligen Moduls die technische Hardware lokal und autark steuert und sie diese beispielsweise ohne Steuerung von außen in bestimmte definierte Zustände bringen kann, wird der Steuerungsaufwand der Gesamtanlage minimiert. Die Steuerung des Moduls kann somit bereits vom Modulhersteller bereitgestellt, programmiert und konfiguriert sein, so dass der Anlagenhersteller mit sehr wenig Aufwand die Steuerung der Gesamtanlage erstellen kann. Hierbei kann jedes Modul einen oder mehrere technische Dienste anbieten, die während des PFE-Engineerings in die Gesamtanlage integriert werden können und danach genutzt werden können.

Da die Außenschnittstelle der Steuerung einen Server umfasst, kann auf eine einfache und einheitliche Weise mit dem Modul kommuniziert werden. Insbesondere können so individuelle Informationen zielgerichtet von dem Modul abgefragt werden, wobei nicht interessierende Informationen nicht übertragen werden. Insbesondere weist der Server hierzu eine fest vorgegebene Informationsstruktur auf, die statische und dynamische Informationen bezügliche der technischen Hardware des Moduls enthält. Daher können an das Modul zielgerichtete Abfragen nach interessierenden Informationen gerichtet werden. Hierbei beschreiben die statischen Informationen die technische Hardware und die Steuerung, so dass alle Informationen bereitgestellt werden, die für das PFE-Engineering benötigt werden. Diese Informationen können beispielsweise eine detaillierte Beschreibung der durch das Modul angebotenen Dienste, eine Beschreibung der verfügbaren Zustände und dem regelungstechnischen Verhalten des Moduls, eine Beschreibung der verfügbaren Befehle und deren Syntax und eine Beschreibung der auslesbaren Zustandsinformationen und Messwerte umfassen.

Daneben umfasst die auf dem verfügbare Informationsstruktur auch dynamische Informationen als Echtzeit-Werte der technischen Hardware und bietet daher die Möglichkeit der Kommunikation mit dem Modul während des Betriebs. Diese Echtzeit-Werte der technischen Hardware werden durch die Steuerung in die Informationsstruktur auf dem Server geschrieben. Damit sind auch sich während des Betriebs dynamisch ändernde Echtzeit-Werte einfach und zielgerichtet von außen abrufbar, beispielsweise durch eine Steuerung der übergeordneten Prozessführungsebene.

Durch die statischen und dynamischen Informationen, die in dem Server zur Verfügung werden, stellt das Modul ein komplettes Modul Type Package bereit, das ein Teil der Verwaltungsschale in Industrie 4.0 bildet und alle Daten und Information zur virtuellen und fachlichen Repräsentation des Moduls umfasst. Dabei werden von der Steuerung sowohl alle Daten und Informationen für das PFE-Engineering als auch für den laufenden Betrieb auf dem Server bereitgestellt.

Beim PFE-Engineering werden die Module in die PFE integriert, indem die MTPs der Module in die PFE eingelesen und die nötigen Bestandteile auf PFE-Seite für jedes benötigte Modul generiert werden. Dies beinhaltet sowohl die Schnittstelle zum Informationsmodell des Moduls als auch die graphische Darstellung des Moduls. Zusätzlich hierzu wird das modulübergreifende Verfahren in der PFE konfiguriert. Weiterhin wird eine Prozedursteuerung zum zeitgerechten Abrufen und Überwachen (Orchestrierung) der Moduldienste erstellt. Die Ansteuerung der Dienste der Module wird parametriert und ggf. eine modulübergreifende Verriegelungslogik erzeugt.

Schließlich wird die physikalische Kommunikation im Netzwerk-Engineering abgebildet und parametriert.

Bevorzugt erzeugt die Steuerung die Echtzeit-Werte aus Steuerdaten und/oder Messdaten der technischen Hardware. Damit werden Steuerdaten und/oder Messdaten, beispielsweise Messwerte, Steuerparameter oder Vorgabewerte, etc. der technischen Hardware zum Abruf bzw. zur Kommunikation bereitgestellt.

Bevorzugt erzeugt die Steuerung die Echtzeit-Werte aus Zuständen des durch die technische Hardware bereitgestellten Dienstes. Damit können die Zustände der technischen Hardware, wie beispielsweise "in Betrieb", "gestoppt", "in Wartung", "defekt", "Aufheizen", oder der Auftragsplan, die Belegungszeiten, der Wartungsplan, etc. der technischen Hardware, zum Abruf bzw. zur Kommunikation bereitgestellt werden.

Bevorzugt erzeugt die Steuerung die Echtzeit-Werte aus historischen Werten von Steuerdaten und/oder Messdaten der technischen Hardware und/oder Kommunikationsdaten. Damit können Echtzeit-Werte zum Abruf bzw. zur Kommunikation bereitgestellt werden, die die Vergangenheit oder Historie berücksichtigen oder aus historischen Werten berechnet werden. Beispielsweise könnte der nächste Wartungstermin der technischen Hardware dynamisch aufgrund aktueller Belastung und vergangener Laufzeiten bei unterschiedlichen Belastungsgraden oder der Anzahl kritischer Zustände der technischen Hardware durch die Steuerung berechnet und bereitgestellt werden. Steuerdaten können auch Zustände von Diensten sein, die durch die technische Hardware bereitgestellt werden.

Bevorzugt können historische Werte Daten wie Schwellwertüberschreitungen, Spitzenwerte, Temperaturverläufe sein. Historische Werte können weiterhin bevorzugt mit einem Zeitstempel versehen sein.

Bevorzugt erzeugt die Steuerung die Echtzeit-Werte durch Extrapolation von Steuerdaten und/oder Messdaten der technischen Hardware und/oder Kommunikationsdaten. Die Steuerung kann weiterhin Echtzeit-Werte berechnen und bereitstellen, die in die Zukunft extrapoliert sind. Beispielsweise kann die Steuerung Temperaturverläufe, notwendige Wartungs- oder Pausezeiten bei derzeitiger Belastung, notwendige zukünftige Abkühlphasen, freie Zeitschlitze, mögliche Einschränkungen einer maximalen Drehzahl, etc. berechnen und bereitstellen. Für die Extrapolation kann die Steuerung unterschiedliche Modelle verwenden.

Bevorzugt weist die Informationsstruktur des Servers eine Anzahl von Objekten mit jeweils zumindest einem Echtzeit-Wert und einer Beschreibung des Echtzeit-Wertes auf. Die Echtzeit-Werte werden in Objekten des Servers abgelegt, so dass sie einfach abgerufen, identifiziert oder auf sie referenziert werden kann.

Bevorzugt ist die Beschreibung im Objekt eine standardisierte Meta-Information für den Echtzeit-Wert. Damit kann ein externes Gerät das Vorhandensein des Echtzeit-Wertes über die Außenschnittstelle abfragen.

Bevorzugt weist der Echtzeit-Wert des Objektes einen Zeitstempel auf. Damit lassen sich mehrere Echtzeit-Werte miteinander synchronisieren und der Verlauf von Echtzeit-Werten über die Zeit lässt sich leicht analysieren oder darstellen.

Bevorzugt erfolgt die Steuerung der technischen Hardware über zumindest einen Dienst, der durch die Steuerung und durch die gesteuerte technische Hardware bereitgestellt wird, wobei der zumindest eine Dienst in der Informationsstruktur im Server abgebildet ist.

Bevorzugt bilden die Objekte der Informationsstruktur des Servers ein Modul Type Package, das alle Informationen enthält, die zur Integration des Moduls in eine technische Anlage notwendig sind. Die Steuerung des Moduls stellt in ihrer Außenschnittstelle, die den Server umfasst, somit alle Informationen bereit, damit das Modul in der PFE-Engineering-Phase identifiziert, informationstechnisch in die Gesamtanlage integriert und parametrisiert werden kann. Weiterhin stellt das Modul Type Package (MTP) auch die dynamischen Informationen bereit, die zur Kommunikation mit anderen Steuerungen notwendig oder vorteilhaft sind.

Bevorzugt ist die Steuerung so ausgebildet, dass der Server dynamisch, insbesondere für jedes Objekt individuell abfragbar ist. Damit kann von außen spezifisch nur die Information abgerufen werden, an der gerade Interesse besteht. Uninteressante Informationen müssen somit nicht übertragen werden, was den Datentransfer im Netzwerk oder auf dem Bus minimiert.

Bevorzugt aktualisiert die Steuerung die Echtzeit-Werte des Servers fortlaufend. Somit werden die Informationen im Modul Type Package laufend auf dem neuesten Stand gehalten.

Bevorzugt ist die Außenschnittstelle weiterhin eingerichtet, Informationen an vor- oder nachgelagerte oder parallelgeschaltete Module auszugeben oder von ihnen zu empfangen. Das Modul kann direkt mit anderen Modulen kommunizieren und Informationen, beispielsweise Befehle mit diesen Modulen auszutauschen. Beispielsweise könnte ein Modul ein Eingangsprodukt von einem im Prozess vorgelagerten Modul anfordern.

Bevorzugt ist die Außenschnittstelle weiterhin eingerichtet, Informationen von einer übergeordneten Anlagensteuerung zu empfangen oder an sie auszugeben. Das Modul kann auch mit übergeordneten Anlagensteuerungen in Kommunikation stehen und von dieser beispielsweise Befehle oder Aufträge zu empfangen und Meldungen an sie auszugeben. Jedoch kann auch bevorzugt auf eine übergeordnete Anlagensteuerung verzichtet werden. Hierbei kommunizieren die Module untereinander, wie oben beschrieben.

Bevorzugt ist die technische Hardware ausgebildet, aus einem Eingangsprodukt ein Ausgangsprodukt zu erzeugen, und die technische Hardware ist weiterhin ausgebildet, zur Erzeugung des Ausgangsproduktes das Eingangsprodukt zu ändern, durch Änderung einer chemischen Zusammensetzung, und/oder Änderung zumindest einer physikalischen Eigenschaft, und/oder Hinzufügen von Material, und/oder Abtragen von Material. Die technische Hardware hat bevorzugt ein Eingangsprodukt und ein Ausgangsprodukt und sie ändert das Eingangsprodukt derart, dass ein Ausgangsprodukt erzeugt wird. Ein Produkt ist dadurch definiert, dass es durch die technische Hardware durch zumindest eines der vier genannten Verfahren geändert werden kann. Durch die Änderung des Eingangsproduktes zum Ausgangsprodukt durch die technische Hardware wird eine Wertschöpfung erzielt. Daher weist der Gesamtprozess zumindest eine technische Hardware dieser Art auf, die eine Wertschöpfung erzielt. Bevorzugt weist die technische Hardware einen Aktor auf, der auf das Eingangsprodukt einwirkt.

Bevorzugt ist der Server ein OPC-UA Server.

Bevorzugt weist eine technische Anlage mehrere der oben beschriebenen Module auf.

Die oben genannte Aufgabe wird auch gelöst durch ein Verfahren zur Steuerung einer technischen Anlage, wobei die Anlage aus mehreren Modulen aufgebaut ist, die jeweils eine technische Hardware zur Durchführung eines technischen Teilprozesses aufweisen, sowie eine Steuerung zur lokalen Steuerung der technischen Hardware und eine Außenschnittstelle der Steuerung aufweisen, wobei die Außenschnittstelle einen Server umfasst, der eine fest vorgegebene Informationsstruktur mit statischen Informationen und dynamischen Informationen aufweist, wobei die statischen Informationen die technische Hardware und die Steuerung beschreiben und das Verfahren die folgenden Schritte aufweist:
a. Schreiben der dynamischen Informationen in die Informationsstruktur als Echtzeit-Werte der technischen Hardware durch die Steuerung; und
b. Bereitstellen der dynamischen Informationen in der Informationsstruktur des Servers.

Damit werden die oben zum Modul ausgeführten Vorteile ebenfalls erzielt, insbesondere wird so eine Möglichkeit geschaffen, während des Betriebs sich dynamisch ändernde Echtzeit-Werte einfach und zielgerichtet von außen abrufbar zu machen, beispielsweise durch eine Steuerung einer übergeordneten Prozessführungsebene oder durch andere Module.

Durch die statischen und dynamischen Informationen, die in dem Server zur Verfügung werden, stellt das Verfahren ein komplettes Modul Type Package bereit, das ein Teil der Verwaltungsschale in Industrie 4.0 bildet und alle Daten und Information zur virtuellen und fachlichen Repräsentation eines Moduls umfasst. Dabei werden von der Steuerung sowohl alle Daten und Informationen für das PFE-Engineering als auch für den laufenden Betrieb auf dem Server bereitgestellt.

Bevorzugt weist das Verfahren weiterhin mindestens einen oder mehrere der folgenden Schritte auf:
c. Erzeugen der Echtzeit-Werte aus Steuerdaten und/oder Messdaten der technischen Hardware durch die Steuerung;
d. Erzeugen der Echtzeit-Werte aus Zuständen, des durch die technische Hardware bereitgestellten Dienstes, durch die Steuerung;
e. Erzeugen der Echtzeit-Werte aus historischen Werten von Steuerdaten und/oder Messdaten der technischen Hardware und/oder Kommunikationsdaten;
f. Erzeugen der Echtzeit-Werte durch Extrapolation von basierend auf Steuerdaten und/oder Messdaten der technischen Hardware und/oder Kommunikationsdaten.

Damit berechnet und stellt die Steuerung Echtzeit-Werte bereit, die auf Steuerdaten, Messdaten, Zuständen, des durch die technische Hardware bereitgestellten Dienstes, historischen Werten davon, und/oder Extrapolation basieren. Entsprechend kann die Steuerung Echtzeit-Werte des Moduls bereitstellen, die auf der Gegenwart, Vergangenheit und Zukunft des Moduls basieren. Insbesondere kann die Steuerung somit in einem Modul Type Package (MTP) insbesondere die dynamischen Informationen bereitstellen, die zur Kommunikation mit anderen Steuerungen notwendig oder vorteilhaft sind.

Weitere bevorzugte Ausführungsformen der Erfindung ergeben sich aus den abhängigen Ansprüchen.

### 4. Kurze Beschreibung der Zeichnungen

Im Folgenden werden bevorzugte Ausführungsformen der vorliegenden Erfindung mithilfe der Zeichnungen beschrieben, in denen zeigt:
- Fig. 1: eine schematische Ansicht einer technischen Anlage mit mehreren Modulen und einer übergeordneten Anlagensteuerung;
- Fig. 2: ein Schema, das die Kommunikation zwischen einem Modul einer technischen Anlage und einer Prozessführungsebene zeigt;
- Fig. 3: ein Diagramm, das eine beispielhafte Architektur eines Modul Type Package Manifests illustriert;
- Fig. 4: ein Diagramm, das eine beispielhafte Architektur einer Bedienbildbeschreibung illustriert; und
- Fig. 5: ein Diagramm, das eine beispielhafte Architektur eines Objekts "Dienst" illustriert.

### 5. Beschreibung bevorzugter Ausführungsformen

Im Folgenden werden bevorzugte Ausführungsformen der vorliegenden Erfindung in Bezug auf die Figuren im Detail beschrieben.

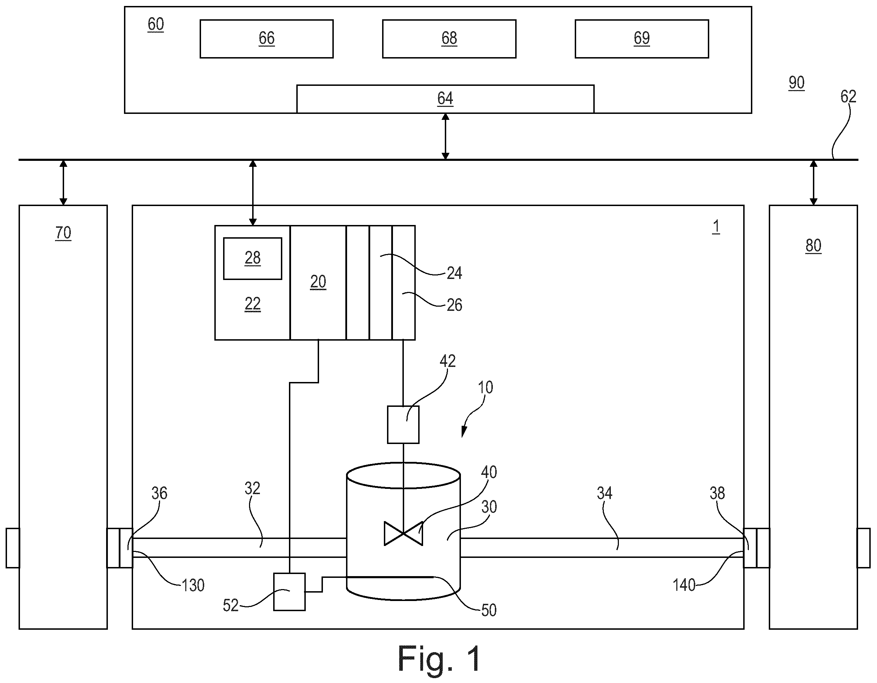

Figur 1 zeigt eine technische Anlage 90 die aus mehreren einzelnen Modulen 1, 70, 80 und möglicherweise weiteren nicht dargestellten Modulen aufgebaut ist. Die technische Anlage 90 weist weiterhin eine Prozessführungsebene (PFE) 60 auf, die beispielsweise durch eine übergeordnete Steuerung 60 gebildet ist, welche über einen geeigneten Bus 62 mit den einzelnen Modulen 1, 70, 80 kommuniziert.

Das Modul 1 der technischen Anlage 90 steht beispielhaft für alle Module 1, 70, 80 der technischen Anlage 90. Es umfasst eine technische Hardware 10 zur Durchführung eines technischen Teilprozesses, beispielsweise für die chemische Industrie. Die technische Anlage kann jedoch auch andere technische Herstellungsprozesse betreffen, beispielsweise die Fertigung und Montage von Produkten, Verpackungstechnik, Logistik, etc..

Bevorzugt ist die technische Hardware 10 des Moduls 1 ausgebildet, aus einem Eingangsprodukt 130 ein Ausgangsprodukt 140 zu erzeugen. Hierzu ist die technische Hardware 10 ist weiterhin ausgebildet, zur Erzeugung des Ausgangsproduktes 140 das Eingangsprodukt 130 zu ändern. Dies kann durch eine Änderung einer chemischen Zusammensetzung, wie dies beispielsweise in Reaktoren in der chemischen Industrie üblich ist, erfolgen. Dies kann weiterhin durch eine Änderung zumindest einer physikalischen Eigenschaft erfolgen, beispielsweise der Temperatur, Dichte, Entropie, etc. Weiterhin kann die Erzeugung eines Ausgangsproduktes 140 erfolgen durch Hinzufügen von Material, beispielsweise beim Montieren, Löten, Bedrucken oder 3D-Drucken. Die Erzeugung kann schließlich auch erfolgen durch Abtragen von Material, wie dies beispielsweise beim Bohren, Fräsen, Ätzen, etc. der Fall ist.

Durch die Änderung des Eingangsproduktes 130 zum Ausgangsprodukt 140 durch die technische Hardware 10 wird eine Wertschöpfung erzielt. Daher weist der Gesamtprozess zumindest eine technische Hardware 10 dieser Art auf, die eine Wertschöpfung erzielt. Bevorzugt weist die technische Hardware zumindest einen Aktor im weitesten Sinne auf, der auf das Eingangsprodukt 130 einwirkt, beispielsweise ein Bedampfer.

Im dargestellten prozesstechnischen Beispiel umfasst die technische Hardware 10 einen Aktor in Form eines Reaktors 30, der einen Mischer 40 aufweist, welcher über einen Elektromotor 42 angetrieben ist. Weiterhin weist der Reaktor 30 einen elektrischen Heizstab 50 auf, welcher über eine Leistungselektronik 52 angesteuert wird. Der Reaktor 30 selbst besteht aus einem bevorzugt geschlossenen Gefäß, an das ein Einlassrohr 32 und ein Auslassrohr 34 angeschlossen ist, um ihn zu befüllen oder zu entleeren. Das Einlassrohr 32 erstreckt sich bis zur Außengrenze des beispielhaften Moduls 1 und endet dort in einem Einlassflansch 36. Durch den Einlassflansch 36 und das Einlassrohr 32 kann dem Reaktor 30 ein Eingangsprodukt 130 zugeführt werden. Ebenso erstreckt sich das Auslassrohr 34 bis zur Systemgrenze des Moduls 1 und endet dort in einem Auslassflansch 38. Durch den Auslassflansch 38 und das Auslassrohr 34 kann ein Ausgangsprodukt aus dem Reaktor 30 abgeführt werden. Über den Einlassflansch 36 ist das Modul 1 an ein vorgeschaltetes Modul 70 und über den Auslassflansch 38 an ein nachgeschaltetes Modul 80 anschließbar. Selbstverständlich sind andere technische Verschaltungsmöglichkeiten, wie beispielsweise mehrere Einlässe oder mehrere Auslässe bzw. Parallelschaltungen von Modulen 1, 70, 80 gleichfalls möglich.

Das Modul 1 weist weiterhin eine Steuerung 20 zur lokalen Steuerung seiner technischen Hardware 10 auf. Die Steuerung 20 ist so eingerichtet, dass sie die technische Hardware 10, also hier beispielhaft den Elektromotor 42 des Rührwerks 40 und die Leistungselektronik 52 des Heizstabs 50 autark steuern kann. Damit ist die Steuerung 20 beispielsweise in der Lage, das Modul 1 technisch in einen definierten Zustand zu bringen. Das Modul 1 kann eine Anzahl von genau definierten technischen Zuständen aufweisen und kann auf Befehl autark zwischen diesen Zuständen wechseln. Damit kann das Modul beispielsweise einen technischen Teilprozess ohne Einfluss von außen autark durchführen.

Das Modul 1 kann weiterhin beispielsweise Sensoren, wie Durchfluss-, Druck-, oder Temperatursensoren, oder elektrisch bedienbare Ventile o. ä. Elemente aufweisen (nicht dargestellt). Solche Sensoren oder Aktoren sind ebenfalls an die Steuerung 20 angeschlossen und können von der Steuerung 20 abgefragt oder gesteuert werden.

Die Steuerung 20 weist hierzu I/O-Module 24, 26 auf, mit denen die Steuerung 20 Aktoren wie den Elektromotor 42 des Rührwerks 40 bzw. die Leistungselektronik 52 des Heizstabs 50 ansteuern kann. Weitere I/O-Module für etwaige Sensoren oder weitere Aktoren sind vorhanden, wenn diese für die technische Funktion des Moduls 1 erforderlich sind.

Die Module 70 und 80 und weitere Module können ähnlich zu dem Modul 1 aufgebaut sein, wobei sie ebenfalls eine Steuerung ähnlich zur Steuerung 20 aufweisen, welche die technische Hardware des jeweiligen Moduls lokal und autark steuern kann und das Modul jeweils in eine Anzahl bestimmter definierter Zustände bringen kann. Entsprechend sind die Module 1,70, 80 in sich steuerungstechnisch autark, so dass technische Hardware und Steuerung zusammen ein flexibel einsetzbares Modul für eine technische Anlage 90 bilden, welches quasi per *"plug and play"* technisch und steuerungstechnisch zu einer Gesamtanlage 90 zusammengesetzt werden kann.

Die Gesamtanlage 90 umfasst eine Prozessführungsebene 60 umfassend eine übergeordnete Steuerung 60, welche über einen Bus 62 steuerungstechnisch mit den einzelnen Modulen 1, 70, 80 verbunden ist. Die übergeordnete Steuerung braucht lediglich genau definierte Befehle an die einzelnen Module 1, 70, 80 zu senden, damit diese einen ihrer vorbestimmten, definierten Zustände einnehmen. Hierbei braucht die übergeordnete Steuerung 60 weder die Steuerungsdetails noch die einzelnen Elemente der technischen Hardware 10 des jeweiligen Moduls 1, 70, 80 zu kennen, noch diese einzelnen Elemente ansteuern. Im Gegenteil, die übergeordnete Steuerung 60 soll bevorzugt lediglich "high level"-Befehle an die einzelnen Module 1, 70, 80 senden, so dass diese dann autark die jeweiligen Zustände einnehmen, um ihren technischen Teilprozess durchzuführen. Dieses Steuerungskonzept vereinfacht die Planung, Projektierung und den Aufbau technischer Anlagen 90. Das Modul 1 bringt quasi neben seiner technischen Hardware 1 seine komplette Steuerung in modularer Weise mit, so dass der übergeordnete Steuerungsaufwand minimiert wird.

Zur Kommunikation der Steuerung 20 des Moduls 1 mit der übergeordneten Steuerung 60 oder den anderen Modulen 70, 80 über den Bus 62 weist die Steuerung 20 eine Außenschnittstelle 22 auf. Die Außenschnittstelle 22 umfasst einen Server 28 zur Kommunikation mit der Prozessführungsebene 60 und den anderen Modulen 70, 80 der Anlage 90. Der Server 28 ist bevorzugt ein OPC-UA Server 28. Der OPC-UA Server 28 weist hierzu eine fest vorgegebene Informationsstruktur auf, die statische Informationen und dynamische Informationen aufweist. Die statischen Informationen beschreiben die technische Hardware 10 und die Steuerung 20, so dass beim PFE-Engineering das Modul 1 als passender Dienstanbieter identifiziert werden kann und entsprechend steuerungstechnisch und auch in Realität in die Gesamtanlage 90 integriert werden kann. Die statischen Informationen können beispielsweise Beschreibungen der vom Modul 1 angebotenen Dienste, Spezifikationen der Eingangsprodukte, Spezifikationen der Ausgangsprodukte, Angaben zu Produktionshilfsmitteln, wie Strom, Wasser, etc., Anwenderdokumentationen, Schnittstellendefinitionen mit entsprechender Beschreibung der Syntax der Befehle, Informationen zur direkten Aufnahme der Kommunikation von der Prozessführungsebene zum Moduls 1, eine graphische Darstellung des Moduls 1, etc. umfassen.

Zusätzlich zu den statischen Informationen umfasst die Informationsstruktur des OPC-UA Servers 28 auch dynamische Informationen betreffend das Modul 1, die sich zeitlich ändern können. Damit kann das Modul 1 über den OPC-UA Server 28 mit anderen Anlagenbestandteilen, insbesondere mit der Prozessführungsebene 60, auch im laufenden Betrieb kommunizieren und dynamische Informationen bereitstellen, bzw. austauschen. Die dynamischen Informationen werden durch die Steuerung 20 als Echtzeit-Werte der technischen Hardware 10 in die Informationsstruktur des OPC-UA Servers eingeschrieben.

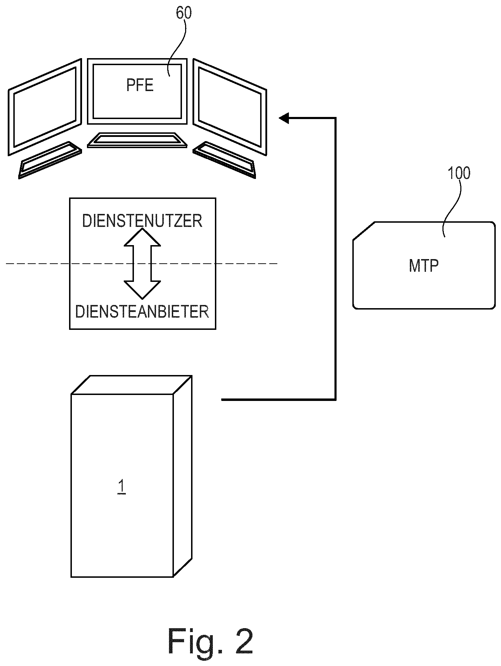

Durch die statischen und dynamischen Informationen, die in dem OPC-UA Server 28 zur Verfügung werden, kann das Modul 1 ein komplettes Modul Type Package (MTP) 100 bereitstellen, das ein Teil der Verwaltungsschale in Industrie 4.0 bildet und alle Daten und Information zur virtuellen und fachlichen Repräsentation eines Moduls umfasst. Dieses Bereitstellen eines MTP 100 eines Moduls 1 als Diensteanbieter an die Prozessführungsebene (PFE) 60 als Dienstenutzer ist beispielhaft in Fig. 2 illustriert.

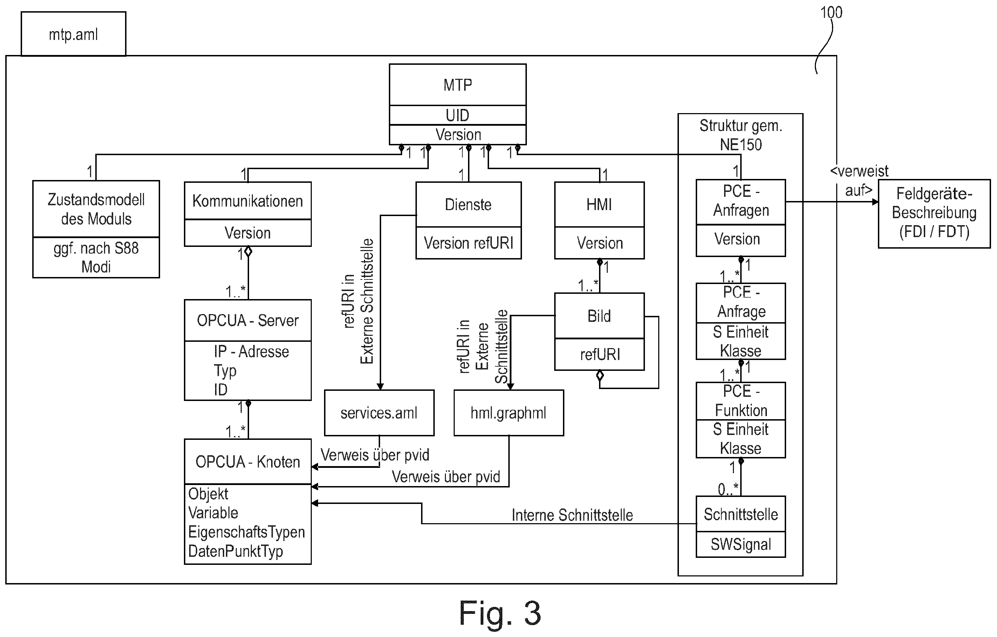

Das MTP 100 kann weiterhin die Informationen umfassen, die zur Orchestrierung, also dem Abrufen und Überwachen der der Dienste des Moduls 1 dienen. Fig. 3 zeigt ein Diagramm, das eine beispielhafte Architektur eines Modul Type Package 100 Manifests illustriert. Dieses Manifest enthält die Daten und Information zur virtuellen & fachlichen Repräsentation des Moduls 1. Das MTP 100 wird im Informationsmodell des OPC-UA-Servers 28 abgebildet.

Das Manifest kann, neben der Version ("MTP/version"), Herstellerinformationen und einer eindeutigen MTP-ID ("MTP/uid") auch Links zu den Beschreibungsdateien folgender Gesichtspunkte enthalten:
Das Manifest umfasst beispielsweise einen Link zum Zustandsmodell des Moduls bzw. aller Dienste ("Module statemodel"): Jedes Modul 1 implementiert wenigstens einen Dienst. Es führt somit wenigstens eine Funktion aus. Die PFE 60 sollte über den aktuellen Zustand der Funktion informiert sein, um unerwünschte Überschneidungen im Prozessablauf zu verhindern, beispielsweise gleichzeitiges Heizen und Kühlen desselben Behälters.

Das Manifest umfasst beispielsweise weiterhin einen Link zur Beschreibung der Außenschnittstelle 22 des Moduls 1 ("Communications"): Das Modul 1 wird von der PFE 60 über die moduleigene Außenschnittstelle 22 angesprochen. Für den in die Außenschnittstelle 22 integrierten OPC UA Servers 28 ist bspw. die URL und die IP Adresse notwendig ("OPCUA Server"). Diese Information muss im Manifest vorhanden sein, wobei integrationsabhängige Parameter, beispielsweise die IP Adresse, nachträglich während des PFE-Engineerings ergänzt werden können oder sich dynamisch ändern können.

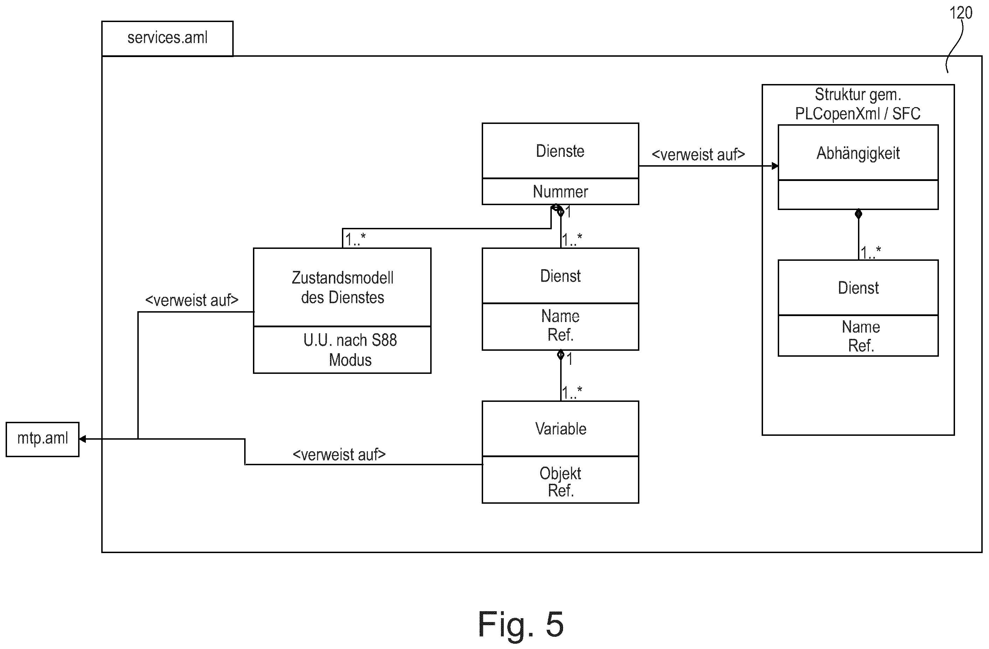

Das Manifest umfasst beispielsweise weiterhin einen Link zur allen Dienste, die das Modul der PFE zur Verfügung stellt ("Services"). Üblicherweise können Module 1 mehrere Funktionen implementieren, z.B. Rühren und Temperieren, als separate Dienste. Diese können durch die PFE 60 in die übergeordnete Prozessteuerung integriert werden. Ein Beispiel für die Struktur eines Dienstes ist in dem Objekt "services.aml" 120 gezeigt, das in Fig. 5 dargestellt ist. Über einen oder mehrere derartiger Dienste kann die Steuerung der technischen Hardware 10 erfolgen. Der oder die Dienste werden durch die Steuerung 20 und durch die technische Hardware 10 bereitgestellt und sind in der Informationsstruktur im OPC-UA Server 28 abgebildet.

Das Manifest umfasst beispielsweise weiterhin einen Link zur Beschreibung der Bedienerschnittstelle ("HMI"). Die Bedienbildhierarchie innerhalb des Moduls und Verweise auf die Bedienbildbeschreibungen müssen dem PFE 60 bekannt gegeben werden. Deshalb werden aus dem Manifest Verknüpfungen zu den zugehörigen Beschreibungen bereitgestellt.

PLT-Stelleninformationen ("PCE-Request") Wenn die internen PLT-Stellen des Moduls der PFE bekannt gegeben werden sollen, so muss ein Link auf die zugehörige Beschreibungsdatei im Manifest vorhanden sein. Die Merkmale der Aspekte Services und Bedienerschnittstelle verweisen jeweilig auf eine bzw. mehrere Dateien in der Ordnerstruktur des MTP. Jeder Dienst verfügt über ein eigenständiges Zustandsmodell. Für die Beschreibung von Abhängigkeiten zwischen verschiedenen Diensten (z.B. gleichzeitiger Ausschluss, Abfolgen, usw.) ist ein Bereich "Dependency" im MTP vorgesehen, in dem eine Verhaltensbeschreibung formal abgebildet wird.

Der Aspekt der Bedienerschnittstelle ist aufgeteilt in Bedienbildhierarchie und Bedienbildbeschreibung. Die Bedienbildhierarchie ("Picture") ist Teil des MTP-Manifests. Die einzelnen Bedienbildbeschreibungen selbst ("hmi.graphml") sind in leicht austauschbaren Dateien in der Ordnerstruktur des MTP abgelegt. Als Modellierungssprache für die Bedienbilder, die sich aus Nodes (Objekten) - für das Prozessequipment, d.h. Ventile, Pumpen, etc. - und Edges (Kanten) - zur Abbildung von Rohrleitungen und Informationsflüssen - zusammensetzen, kann das durch Werkzeuge und Bibliotheken gut unterstütze Format GraphML verwendet werden.

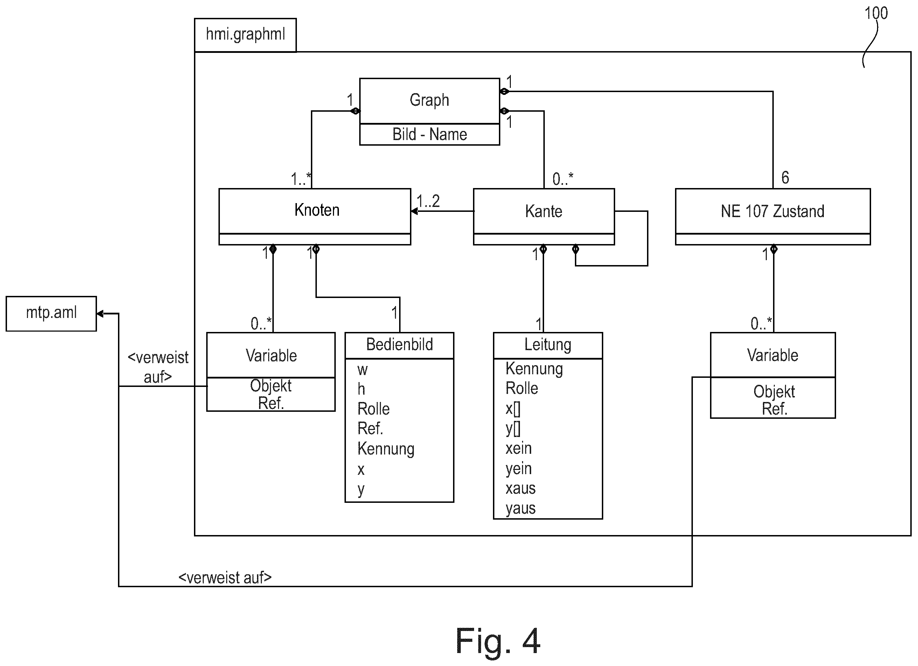

Die Architektur einer Bedienbildbeschreibung ist in Fig. 4 dargestellt. Nodes entsprechen den Bedienbildelementen und besitzen neben ihrer Bedeutung auch Lage-, Größen- und Variableninformationen. Nodes können durch Edges verbunden sein. Eine Edge kann somit als Rohrleitung oder Informationsfluss auf dem Bedienbild interpretiert werden. Um Diagnoseinformation des Moduls auch dem Bediener zugänglich zu machen, enthält jedes Bedienbild auch entsprechende Statusanzeigen, mit Verbindungen zu den passenden Variablen. Letztlich wird das Bedienbild als Graph abgebildet und ist somit während des PFE-Engineerings verhältnismäßig einfach interpretierbar.

Die Steuerung 20 kann die die Echtzeit-Werte, die in die Informationsstruktur des OPC-UA Servers 28 eingeschrieben werden aus Steuerdaten und/oder Messdaten der technischen Hardware 10 erzeugen. Damit werden Parameter, beispielsweise Messwerte, Steuerparameter oder Vorgabewerte, etc. der technischen Hardware 10 zum Abruf bzw. zur Kommunikation bereitgestellt. Im Beispiel des Moduls 1 könnten die Echtzeit-Werte beispielsweise die Drehzahl des Motors 42 oder die aktuelle Temperatur des Reaktors 30 sein.

Daneben kann die Steuerung 20 die Echtzeit-Werte aus Zuständen des durch die technische Hardware 10 bereitgestellten Dienstes erzeugen. Damit können die Zustände der technischen Hardware 10, wie beispielsweise "in Betrieb", "gestoppt", "in Wartung", "defekt", "Aufheizen", oder der Auftragsplan, die Belegungszeiten, der Wartungsplan, etc. der technischen Hardware 10, zum Abruf bzw. zur Kommunikation bereitgestellt werden. Im Beispiel des Moduls 1 könnten die Echtzeit-Werte beispielsweise die Zustände "mischt" und "heizt auf" sein, oder die Verfügbarkeit bzw. Nicht-Verfügbarkeit eines bestimmten Dienstes. Beispielsweise, wenn der Heizstab 50 ausgetauscht werden muss aber der Mischer 40 währenddessen zur Verfügung steht.

Weiterhin kann die Steuerung 20 die Echtzeit-Werte auch aus historischen Werten von Steuerdaten und/oder Messdaten der technischen Hardware 10 und/oder

Kommunikationsdaten erzeugen. Damit können Echtzeit-Werte zum Abruf bzw. zur Kommunikation bereitgestellt werden, die die Vergangenheit oder Historie berücksichtigen oder aus historischen Werten berechnet werden. Beispielsweise könnte der nächste Wartungstermin der technischen Hardware 10 dynamisch aufgrund aktueller Belastung und vergangener Laufzeiten bei unterschiedlichen Belastungsgraden oder der Anzahl kritischer Zustände der technischen Hardware 10 durch die Steuerung 60 berechnet und bereitgestellt werden. Wenn beispielsweise der Mischer 40 durch den Motor 42 mit unterschiedlichen Drehzahlen und Leistungen betrieben werden kann, kann die Dauer der Verfügbarkeit des Moduls 1 von den Drehzahlen und Leistungen der vergangenen Aufträge abhängen. Ggf. muss der Motor 42 zum Abkühlen im aktuellen Auftrag mit einer geringeren Leistung oder Drehzahl betrieben werden.

Außerdem kann die Steuerung 20 die Echtzeit-Werte durch Extrapolation von Parametern der technischen Hardware 10 oder von Zuständen des durch die technische Hardware 10 bereitgestellten Dienstes erzeugen. Die Steuerung kann weiterhin Echtzeit-Werte berechnen und bereitstellen, die in die Zukunft extrapoliert sind. Beispielsweise kann die Steuerung Temperaturverläufe, notwendige Wartungs- oder Pausezeiten bei derzeitiger Belastung, notwendige zukünftige Abkühlphasen, freie Zeitschlitze, mögliche Einschränkungen einer maximalen Drehzahl, etc. berechnen und bereitstellen. Für die Extrapolation kann die Steuerung 20 unterschiedliche Modelle verwenden. Damit kann die Steuerung 20 beispielsweise nach Abschluss eines Auftrags der Prozessführungsebene 60 einen Dienst nur mit bestimmten Randbedingungen anbieten. Beispielsweise, wenn der Motor 42 noch erhitzt ist, ein Rühren eines Produktes im Reaktor 30 nur bis zu einer bestimmten Leistung bzw. bis zu einer bestimmten Drehzahl des Motors 42 oder nur für eine begrenzte Zeitdauer.

Jeder Modultyp wird einmalig entwickelt. Dies beinhaltet sowohl die physikalische Gestaltung des hierin zu realisierenden Verfahrensschritts als auch die Erstellung der informationstechnischen Schnittstelle zu übergeordneten Systemen. Hinzu kommt das Engineering für die Steuerungslogik und die Bedienbilder. Letztlich wird das Engineering wie bei einer kleinen Anlage durchgeführt, mit dem Unterschied, dass das Modul 1 in seiner Funktion generisch für verschiedene Einsatzarten ausgelegt werden muss. Zusätzlich zum physikalischen und informationstechnischen Entwurf des Moduls muss am Ende das MTP 100 zur Integration in die PFE 60 generiert und zusammen mit dem Modul 1 ausgeliefert werden.

Beim PFE-Engineering werden die Module 1 in die PFE 60 integriert, indem die MTPs 100 der Module 1 in die PFE 60 eingelesen und die nötigen Bestandteile auf PFE-Seite für jedes benötigte Modul 1 generiert werden. Dies beinhaltet die Schnittstelle zum Informationsmodell des Moduls 1 als auch die graphische Darstellung des Moduls 1. Zusätzlich hierzu wird das modulübergreifende Verfahren in der PFE 60 konfiguriert. Die Prozedursteuerung zum zeitgerechten Abrufen und Überwachen (Orchestrierung) der Moduldienste wird erstellt. Die Ansteuerung der Dienste der Module 1 wird parametriert und ggf. eine modulübergreifende Verriegelungslogik erzeugt. Letztlich wird die physikalische Kommunikation im Netzwerk-Engineering abgebildet und parametriert.

Weiterhin kann die Steuerung 20 autark für das jeweilige Modul 1 alle Sicherheitsfunktionen, Meldefunktionen, Protokollfunktionen für das Modul 1 übernehmen, so dass die übergeordnete Steuerung 60 bzw. Prozessführungsebene 60 auch von dieser Aufgabe entlastet ist. Ebenso ist es möglich das Modul 1 über die Steuerung 20 ohne eine übergeordnete Steuerung, manuell zu bedienen, z.B. wenn nur sehr geringe Mengen produziert werden sollen und sich eine Einbindung in eine übergeordnete Steuerung hierfür nicht lohnen würde. Zu diesem Zweck weist das Modul 1 ein eigenes Userinterface oder Bedienpanel auf.

Über den OPC-UA Server 28 kann das Modul 1 auch Informationen, z.B. definierte Befehle, an vor- oder nachgelagerte oder parallelgeschaltete Module ausgeben bzw. bereitstellen. Damit kann beispielsweise das Modul 1 dem vorgelagerten Modul 70 mitteilen, ein Vorprodukt an das Modul 1 weiterzuleiten, wenn das Modul 1 dieses verarbeiten soll. Ebenso kann das Modul 1 einen definierten Befehl an das nachgelagerte Modul 80 ausgeben, wenn es die Verarbeitung abgeschlossen hat und das fertige Zwischenprodukt zur weiteren Bearbeitung an das Modul 130 weiterleiten möchte. Entsprechend können die Module 1, 70, 80 eine horizontale Kommunikation untereinander verwirklichen, ohne dass eine übergeordnete Steuerung oder PFE 60 notwendigerweise zwischengeschaltet ist.

Beispiele für definierte Zustände der Module 1, 70, 80 sind: "Leerlauf", "läuft", "Halt", "gestoppt", "abgebrochen" und "beendet". Weiterhin kann der Zustand "läuft" in unterschiedliche Betriebsmodi untergliedert sein, wenn dies für den Teilprozess möglich ist. Damit kann der Teilprozess beispielsweise mit unterschiedlichen Parametern oder mit unterschiedlichen Verläufen ablaufen. Entsprechend können über die Außenschnittstelle 22 entsprechend definierte Befehle an das Modul 1 übergeben werden, um dessen Steuerung 20 anzuweisen den entsprechenden Zustand anzufahren. Der Übergang zwischen den einzelnen Zuständen kann dann von der Steuerung 20 autark geregelt werden.

Zur Kommunikation mit den OPC-UA Servern 28 der Module 1, 70, 80 weist die Prozessführungsebene 60 einen OPC-UA Client 64 auf. Dieser kann entsprechende Abfragen an den OPC-UA Server 28 richten und dort zielgerichtet Informationen abrufen oder ablegen. Prozessführungsebene 60 weist weiterhin ein Modul 66 für die eigentliche Prozessführung und ein Modul für eine Bedienerschnittstelle (HMI) 68 auf. Daneben kann die Prozessführungsebene 60 mit weiteren Elementen oder Modulen 69 weitere Funktionen ausführen.

### Bezugszeichenliste:

- 1: Modul
- 10: technische Hardware
- 20: Steuerung
- 22: Außenschnittstelle
- 24,26: I/O-Modul
- 28: Server, OPC-UA Server
- 30: Reaktor
- 32: Einlassleitung
- 34: Auslassleitung
- 36: Einlassflansch
- 38: Auslassflansch
- 40: Rührwerk
- 42: Motor
- 50: Heizstab
- 52: Leistungselektronik
- 60: Prozessführungsebene (PFE) / übergeordnete Steuerung
- 62: Datenbus
- 64: OPC-UA Client
- 66: Prozessführung
- 68: Bedienerschnittstelle
- 69: weitere Elemente
- 70, 80: weitere Module
- 90: technische Anlage
- 100: Module Type Package / MTP Manifest
- 110: Bedienbildbeschreibung
- 120: Objekt "service.aml"
- 130: Eingangsprodukt
- 140: Ausgangsprodukt

## Patentansprüche

1. Modul (1) für eine technische Anlage (90) aufweisend:
a. eine technische Hardware (10) zur Durchführung eines technischen Teilprozesses;
b. eine Steuerung (20) zur lokalen Steuerung der technischen Hardware (10), wobei die Steuerung (20) eingerichtet ist, die technische Hardware (10) autark zu steuern; und
c. eine Außenschnittstelle (22) der Steuerung (20), wobei die Außenschnittstelle (22) einen Server (28) umfasst;
d. der Server (28) eine fest vorgegebene Informationsstruktur mit statischen Informationen aufweist;
e. wobei die statischen Informationen die technische Hardware (10) und die Steuerung (20) beschreiben; und
f. wobei die Steuerung (20) eingerichtet ist, die technische Hardware (10) basierend auf den definierten Zuständen autark in einen Zustand aus einer Anzahl von definierten technischen Zuständen zu bringen und autark zwischen den Zuständen zu wechseln;
**dadurch gekennzeichnet, dass**
g. die fest vorgegebenen Informationsstruktur des Servers (28) weiterhin dynamische Informationen aufweist und die Steuerung (20) die dynamischen Informationen als Echtzeit-Werte der technischen Hardware (10) in die Informationsstruktur schreibt; und
h. die Außenschnittstelle so eingerichtet ist, dass über die Außenschnittstelle (22) entsprechend definierte Befehle an das Modul (1) übergeben werden können, um die Steuerung (20) anzuweisen, den entsprechenden Zustand anzufahren.

2. Modul nach Anspruch 1, wobei die Steuerung (20) die Echtzeit-Werte aus Steuerdaten und/oder Messdaten der technischen Hardware (10) erzeugt.

3. Modul nach einem der Ansprüche 1 oder 2, wobei die Steuerung (20) die Echtzeit-Werte aus Zuständen des durch die technische Hardware (10) bereitgestellten Dienstes erzeugt.

4. Modul nach einem der Ansprüche 1 bis 3, wobei die Steuerung (20) die Echtzeit-Werte aus historischen Werten von Steuerdaten und/oder Messdaten der technischen Hardware (10) und/oder Kommunikationsdaten erzeugt.

5. Modul nach einem der Ansprüche 1 bis 4, wobei die Steuerung (20) die Echtzeit-Werte durch Extrapolation basierend auf Steuerdaten und/oder Messdaten der technischen Hardware (10) und/oder Kommunikationsdaten erzeugt.

6. Modul nach einem der Ansprüche 1 bis 5, wobei die Informationsstruktur des Servers (28) eine Anzahl von Objekten mit jeweils zumindest einem Echtzeit-Wert und einer Beschreibung des Echtzeit-Wertes aufweist.

7. Modul nach Anspruch 6, wobei die Beschreibung im Objekt eine standardisierte Meta-Information für den Echtzeit-Wert ist.

8. Modul nach einem der Ansprüche 6 oder 7, wobei der Echtzeit-Wert des Objekts einen Zeitstempel aufweist.

9. Modul nach einem der Ansprüche 1 bis 8, wobei die Steuerung der technischen Hardware über zumindest einen Dienst erfolgt, der durch die Steuerung und durch die gesteuerte technische Hardware bereitgestellt wird, wobei der zumindest eine Dienst in der Informationsstruktur im Server abgebildet ist.

10. Modul nach einem der Ansprüche 6 bis 9, wobei die Objekte der Informationsstruktur des Servers (28) ein Modul Type Package (100) bilden, das alle Informationen enthält, die zur Integration des Moduls in eine technische Anlage (90) notwendig sind.

11. Modul nach einem der Ansprüche 1 bis 10, wobei die Steuerung (20) so ausgebildet ist, dass der Server (28) dynamisch, insbesondere für jedes Objekt individuell abfragbar ist.

12. Modul nach einem der Ansprüche 1 bis 11, wobei die Außenschnittstelle (22) weiterhin eingerichtet ist, Informationen an vor- oder nachgelagerte oder parallelgeschaltete Module (70, 80) auszugeben oder von ihnen zu empfangen.

13. Modul gemäß einem der Ansprüche 1 bis 12, wobei der Server (28) ein OPC-UA Server ist.

14. Technische Anlage (90) aufweisend mehrere der Module (1, 70, 80) nach einem der Ansprüche bis 13.

15. Verfahren zur Steuerung einer technischen Anlage (90), wobei die Anlage (90) aus mehreren Modulen (1, 70, 80) aufgebaut ist, die jeweils eine technische Hardware (10) zur Durchführung eines technischen Teilprozesses aufweisen, sowie eine Steuerung (20) zur lokalen Steuerung der technischen Hardware (10) und eine Außenschnittstelle (22) der Steuerung (20) aufweisen, wobei die Außenschnittstelle (22) einen Server (28) umfasst, der eine fest vorgegebene Informationsstruktur mit statischen Informationen aufweist, wobei die statischen Informationen die technische Hardware (10) und die Steuerung (60) beschreiben und wobei die Steuerung (20) eingerichtet ist, die technische Hardware (10) basierend auf definierten Zuständen autonom zu steuern und autonom den Übergang zwischen den Zuständen zu steuern, **dadurch gekennzeichnet dass**
die fest vorgegebenen Informationsstruktur des Servers (28) weiterhin dynamische Informationen aufweist,
und das Verfahren die folgenden Schritte aufweist:
a. Schreiben der dynamischen Informationen in die Informationsstruktur als Echtzeit-Werte der technischen Hardware (10) durch die Steuerung (20);
b. Bereitstellen der dynamischen Informationen in der Informationsstruktur des Servers (28); und
c. Übergeben über die Außenschnittstelle (22) von entsprechend definierten Befehlen an ein Modul (1), um die Steuerung (20) des Moduls anzuweisen, den entsprechenden Zustand anzufahren.

## Claims

1. Module (1) for a technical facility (90), comprising:
a. technical hardware (10) for performing a technical subprocess;
b. a controller (20) for locally controlling the technical hardware (10), wherein the controller (20) is configured to autonomously control the technical hardware (10); and
c. an external interface (22) of the controller (20), wherein the external interface (22) comprises a server (28);
d. the server (28) comprises a fixedly predefined information structure with static information;
e. wherein the static information describes the technical hardware (10) and the controller (20); and
f. wherein the controller (20) is configured to bring the technical hardware (10) based on the defined states autonomously into one state of a number of defined technically states and to autonomously change between the states;
**characterized in that**
g. the fixedly predefined information structure of the server (28) further comprises dynamic information and the controller (20) writes the dynamic information into the information structure as real-time values of the technical hardware (10); and
h. the external interface is configured to transmit correspondingly defined instructions to the module (1) via the external interface (22) to instruct the controller (20) to approach the corresponding state.

2. Module according to claim 1, wherein the controller (20) is configured to generate the real-time values from control data and/or measurement data of the technical hardware (10).

3. Module according to one of the claims 1 or 2, wherein the controller (20) generates the real-time values from states of the service provided by the technical hardware (10).

4. Module according to one of the claims 1 to 3, wherein the controller (20) generates the real-time values from historical values of control data and / or measurement data of the technical hardware (10) and / or communication data.

5. Module according to one of the claims 1 to 4, wherein the controller (20) generates the real-time values by extrapolation based on control data and / or measurement data of the technical hardware (10) and / or communication data.

6. Module according to claim 1 to 5, wherein the information structure of the server (28) comprises a number of objects each comprising at least a real-time value and a description of the real-time value.

7. Module according to claim 6, wherein the description in the object is a standardized meta-information for the real-time value.

8. Module according to one of the claims 6 or 7, wherein the real-time value of the object comprises a time stamp.

9. Module according to one of the claims 1 to 8, wherein the control of the technical hardware is effected via at least one service which is provided by the controller and by the controlled technical hardware, wherein the at least one service is mapped in the information structure in the server.

10. Module according to one of the claims 6 to 9, wherein the objects of the information structure of the server (28) form a module type package (100) which contains all information which is necessary for integrating the module into a technical facility (90).

11. Module according to one of the claims 1 to 10, wherein the controller (20) is configured such that the server (28) can be queried dynamically, in particular individually for each object.

12. Module according to one of the claims 1 to 11, wherein the external interface (22) is furthermore configured to output information to or receive information from modules (70, 80) connected upstream or downstream or in parallel.

13. Module according to one of the claims 1 to 12, wherein the server (28) is an OPC-UA server.

14. Technical facility (90) comprising a plurality of the modules (1, 70, 80) according to one of the claims 1 to 13.

15. Method for controlling a technical facility (90), wherein the facility (90) is constructed from a plurality of modules (1, 70, 80) which each have a technical hardware (10) for carrying out a technical subprocess, and have a controller (20) for locally controlling the technical hardware (10) and an external interface (22) of the controller (20), wherein the external interface (22) comprises a server (28) which has a fixedly predefined information structure with static information, wherein the static information describes the technical hardware (10) and the controller (60), and wherein the controller (20) is configured to autonomously control the technical hardware (10) based on the defined states and autonomously control the transition between the states, **characterized in that**
the fixedly predefined information structure of the server (28) further comprises dynamic information;
and the method comprises the following steps:
a. writing the dynamic information into the information structure as real-time values of the technical hardware (10) by the controller (20);
b. providing the dynamic information in the information structure of the server (28); and
c. transmitting correspondingly defined instructions to a module (1) via the external interface (22) to instruct the controller (20) of the module to approach the corresponding state.

## Revendications

1. Module (1) pour une installation technique (90) comprenant :
a. un matériel technique (10) destiné à exécuter un sous-processus technique ;
b. une commande (20) prévue pour la commande locale du matériel technique (10), la commande (20) étant configurée pour commander le matériel technique (10) de manière autonome ; et
c. une interface externe (22) de la commande (20), ladite interface externe (22) comprenant un serveur (28) ;
d. le serveur (28) présentant une structure d'informations prédéfinie contenant des informations statiques ;
e. les informations statiques décrivant le matériel technique (10) et la commande (20) ; et
f. la commande (20) étant configurée pour faire passer de manière autonome le matériel technique (10) dans un état parmi un ensemble d'états techniques définis, sur la base des états prédéfinis, et pour basculer de manière autonome entre lesdits états ;
**caractérisé en ce que**
g. la structure d'informations prédéfinie du serveur (28) comporte en outre des informations dynamiques, et la commande (20) écrit dans ladite structure d'informations les informations dynamiques sous forme de valeurs en temps réel du matériel technique (10) ; et
h. l'interface externe est configurée de telle sorte que des commandes définies puissent être remises au module (1) via l'interface externe (22), afin d'instruire la commande (20) de passer à l'état correspondant.

2. Module selon la revendication 1, dans lequel la commande (20) génère les valeurs en temps réel à partir de données de commande et/ou de mesure du matériel technique (10).

3. Module selon l'une des revendications 1 ou 2, dans lequel la commande (20) génère les valeurs en temps réel à partir des états du service délivré par le matériel technique (10).

4. Module selon l'une des revendications 1 à 3, dans lequel la commande (20) génère les valeurs en temps réel à partir de valeurs historiques de données de commande et/ou de mesure du matériel technique (10) et/ou de données de communication.

5. Module selon l'une des revendications 1 à 4, dans lequel la commande (20) génère les valeurs en temps réel par extrapolation sur la base de données de commande et/ou de mesure du matériel technique (10) et/ou de données de communication.

6. Module selon l'une des revendications 1 à 5, dans lequel la structure d'informations du serveur (28) comporte un certain nombre d'objets comprenant chacun au moins une valeur en temps réel et une description de ladite valeur.

7. Module selon la revendication 6, dans lequel la description figurant dans l'objet est une méta-information normalisée de la valeur en temps réel.

8. Module selon l'une des revendications 6 ou 7, dans lequel la valeur en temps réel de l'objet comporte un horodatage.

9. Module selon l'une des revendications 1 à 8, dans lequel la commande du matériel technique est effectuée au moyen d'au moins un service délivré par la commande et par le matériel technique commandé, ledit service étant représenté dans la structure d'informations du serveur.

10. Module selon l'une des revendications 6 à 9, dans lequel les objets de la structure d'informations du serveur (28) forment un package de type de module (100) contenant toutes les informations nécessaires à l'intégration du module dans une installation technique (90).

11. Module selon l'une des revendications 1 à 10, dans lequel la commande (20) est conçue de telle sorte que le serveur (28) peut être interrogé de manière dynamique, distinctement pour chaque objet.

12. Module selon l'une des revendications 1 à 11, dans lequel l'interface externe (22) est en outre configurée pour émettre ou recevoir des informations vers ou depuis des modules (70, 80) en amont, en aval ou montés en parallèle.

13. Module selon l'une des revendications 1 à 12, dans lequel le serveur (28) est un serveur OPC-UA.

14. Installation technique (90) comprenant plusieurs modules (1, 70, 80) selon l'une des revendications 1 à 13.

15. Procédé de commande d'une installation technique (90) qui est constituée de plusieurs modules (1, 70, 80) comprenant chacun un matériel technique (10) pour l'exécution d'un sous-processus technique, une commande (20) pour assurer la commande locale du matériel technique (10) et une interface externe (22) de la commande (20), ladite interface externe (22) comprenant un serveur (28) présentant une structure d'informations prédéfinie contenant des informations statiques, lesdites informations statiques décrivant le matériel technique (10) et la commande (20), ladite commande (20) étant configurée pour commander de manière autonome le matériel technique (10) en fonction d'états définis et la transition entre lesdits états, **caractérisé en ce que**
la structure d'informations prédéfinie du serveur (28) comprend en outre des informations dynamiques,
et le procédé inclut les étapes suivantes :
a. écriture, par la commande (20), des informations dynamiques dans la structure d'informations sous forme de valeurs en temps réel du matériel technique (10) ;
b. mise à disposition des informations dynamiques dans la structure d'informations du serveur (28) ; et
c. remise, via l'interface externe (22), de commandes définies à un module (1), afin d'instruire la commande (20) du module de passer à l'état correspondant.
